# EUROPEAN PATENT APPLICATION

(11) **EP 2 763 439 A1**
(43) Date of publication of application: **06.08.2014**
(21) Application number: 14150128.8
(22) Date of filing: 03.01.2014
(51) Int. Cl.: H04W 8/00, H04W 4/02, H04W 76/02, H04W 68/00

(54) **Method and apparatus for establishing a direct connection in a proximity-services communication system**

(30) Priority: 07.01.2013 US 201361749540 P
(71) Applicant: Innovative Sonic Corporation, Taipei City 10049 (TW)
(72) Inventor: Kuo, Richard Lee-Chee, 10049 Taipei City (TW)
(74) Representative: Hoefer & Partner

(57) **Abstract**

A method and apparatus for establishing a direct connection in a ProSe (Proximity Services) communication system are disclosed. The method includes a first UE initiating a direct connection with a second UE and receiving a CID (Connection Identifier) from an administration entity of the ProSe communication system, wherein the CID is used for identifying the direct connection. The method further includes the administrative entity of the ProSe communication system receiving a request from a first UE (User Equipment) to establish a direct connection with a second UE and sending a CID (Connection Identifier) to a first UE connection, wherein the CID is used for identifying the direct connection.

## Description

### CROSS-REFERENCE TO RELATED APPLICATIONS

The present Application claims the benefit of U.S. Provisional Patent Application Serial No. 61/749,540 filed on January 7, 2013, the entire disclosure of which is incorporated herein by reference.

### FIELD

This disclosure generally relates to wireless communication networks, and more particularly, to a method and apparatus for establishing a direct connection in a ProSe (Proximity Services) communication system.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

### SUMMARY

Methods and apparatus for establishing a direct connection in a ProSe (Proximity Services) communication system according to the invention are disclosed in independent claims 1, 6, and 10, respectively. Preferred embodiments thereof are respectively defined in the respective dependent claims. The method according to a first aspect includes a first UE initiating a direct connection with a second UE and receiving a CID (Connection Identifier) from an administration entity of the ProSe communication system, wherein the CID is used for identifying the direct connection. The method further includes the administrative entity of the ProSe communication system receiving a request from a first UE (User Equipment) to establish a direct connection with a second UE and sending a CID (Connection Identifier) to a first UE, wherein the CID is used for identifying the direct connection.

### BRIEF DESCRIPTION OF THE DRAWINGS

FIG. 1 shows a diagram of a wireless communication system according to one exemplary embodiment.
FIG. 2 is a block diagram of a transmitter system (also known as access network) and a receiver system (also known as user equipment or UE) according to one exemplary embodiment.
FIG. 3 is a functional block diagram of a communication system according to one exemplary embodiment.
FIG. 4 is a functional block diagram of the program code of FIG. 3 according to one exemplary embodiment.
FIG. 5 is a diagram of a default data path setup in an EPS (Evolved Packet System) for communication between two UEs (User Equipment) according to one exemplary embodiment.

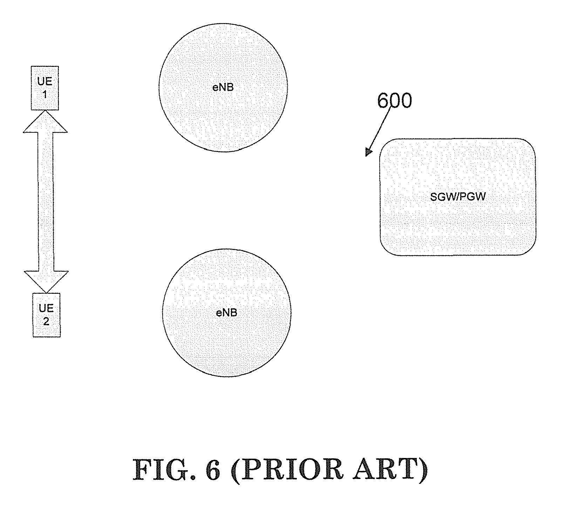

FIG. 6 is a diagram of a direct mode data path in an EPS for communication between two UEs according to one exemplary embodiment.

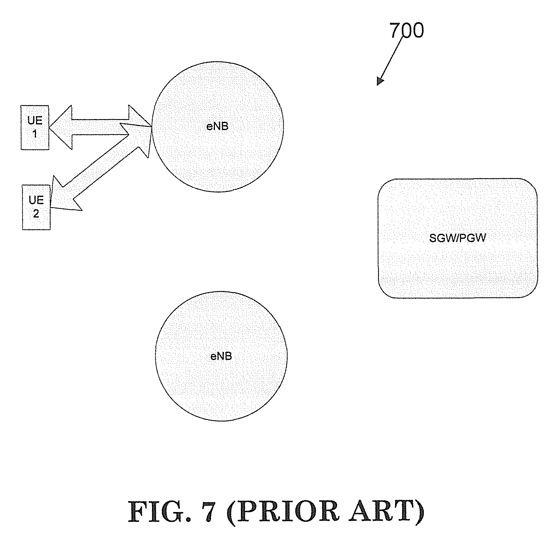

FIG. 7 is a diagram of a locally-routed data path in an EPS for communication between two UEs when UEs are served by the same eNB (evolved Node B) according to one exemplary embodiment.

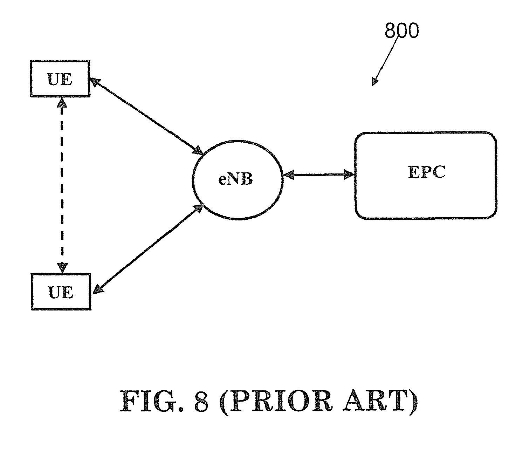

FIG. 8 illustrates an exemplary control path for network supported ProSe communication for UEs served by the same eNB according to one exemplary embodiment.
FIG. 9 is a flow chart according to one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including Document Nos. TR 22.803-110 and "Feasibility Study for Proximity Services (ProSe)". The standards and documents listed above are hereby expressly incorporated herein.

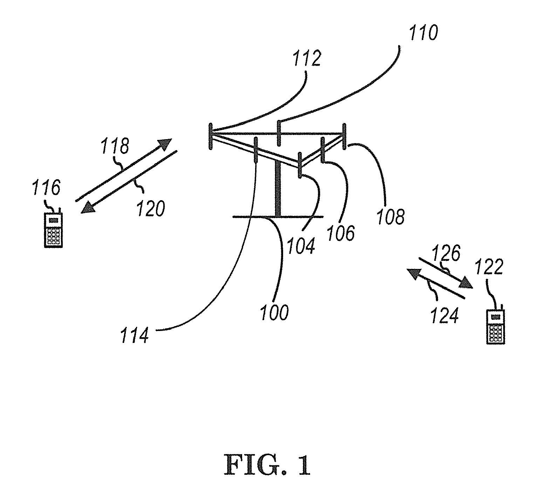

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an eNodeB, or some other terminology. An access terminal (AT) may also be called user equipment (UE), a wireless communication device, terminal, access terminal or some other terminology.

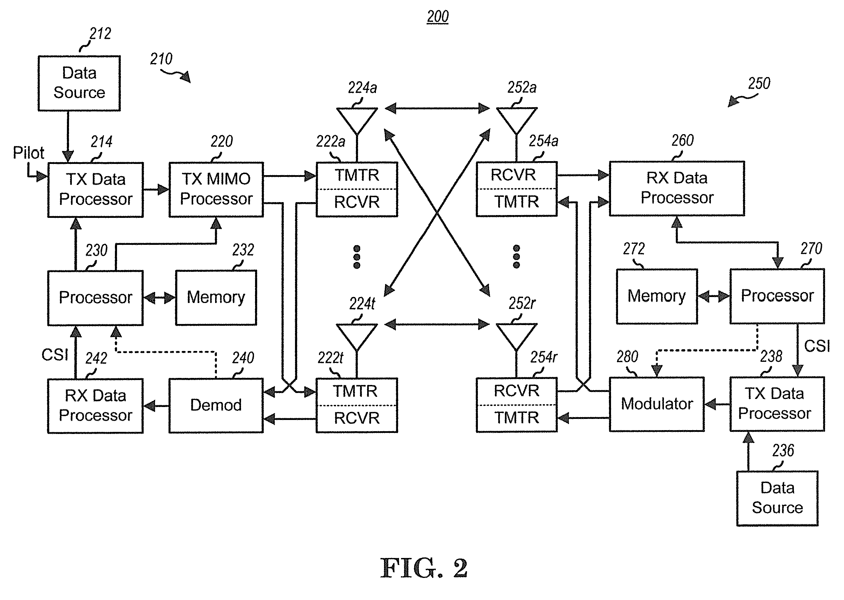

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

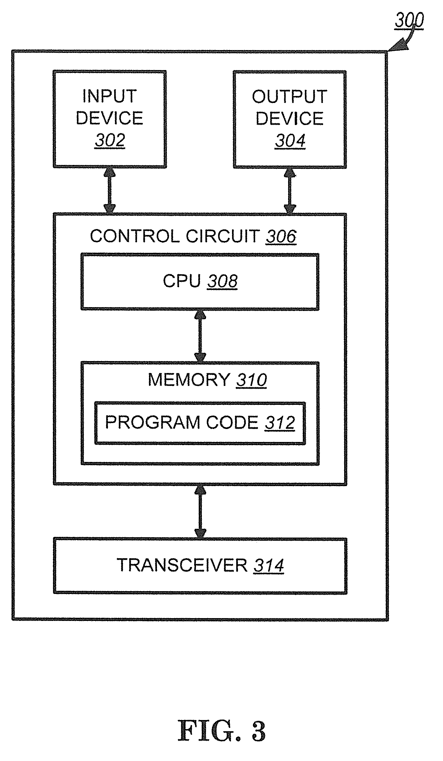

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly.

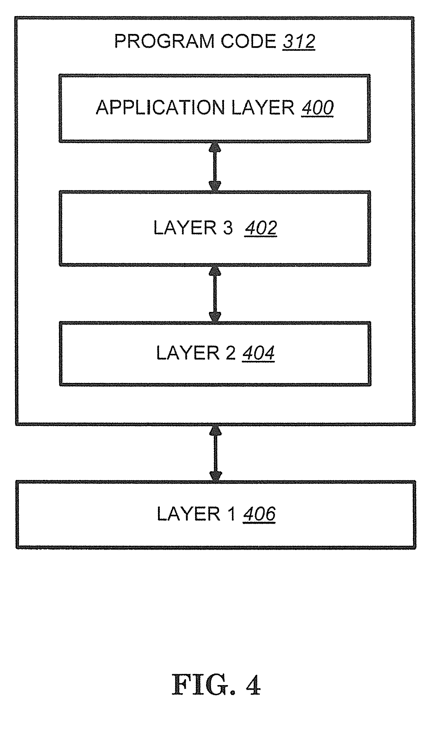

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

Proximity services (ProSe) have been studied in 3GPP SA in Release 12. The feasibility study for proximity services is captured in 3GPP TR 22.803-110. Section 1 of 3GPP TR 22.803-110 specifies the objective of the study as follows:
The objective is to study use cases and identify potential requirements for an operator network controlled discovery and communications between devices that are in proximity, under continuous network control, and are under a 3GPP network coverage, for:
   1. Commercial/social use
   2. Network offloading
   3. Public Safety
   4. Integration of current infrastructure services, to assure the consistency of the user experience including reachability and mobility aspects
Additionally, the study item will study use cases and identify potential requirements for
   5. Public Safety, in case of absence of EUTRAN coverage (subject to regional regulation and operator policy, and limited to specific public-safety designated frequency bands and terminals)
Use cases and service requirements will be studied including network operator control, authentication, authorization, accounting and regulatory aspects.
The study does not apply to GERAN or UTRAN.

Section 3 of 3GPP TR 22.803-210 defines a ProSe communication as follows:
**ProSe Communication:** a communication between two UEs in proximity by means of a communication path established between the UEs. The communication path could for example be established directly between the UEs or routed via local eNB(s).

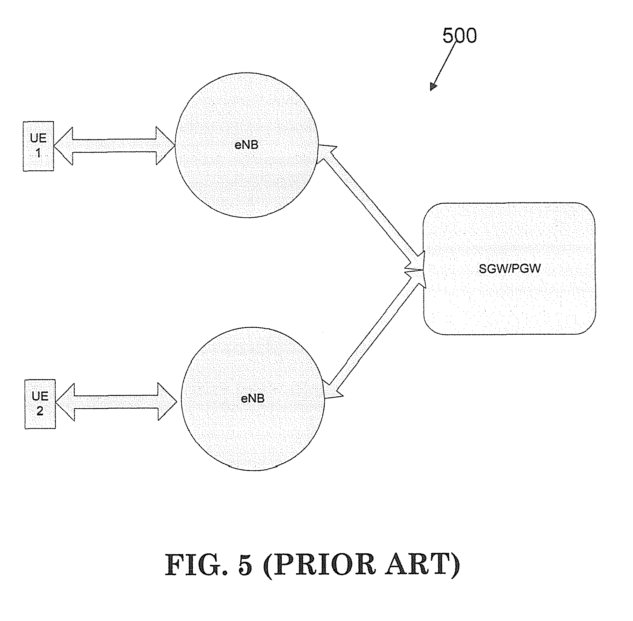

Section 4 of 3GPP TR 22.803-110 discusses the differences between the default data path (or called infrastructure path) scenario and the ProSe communication scenario. For the default data path scenario, the data path (user plane) goes through the operator network. The typical data path for this type of communication is shown in FIG. 5, where eNB(s) and/or GW(s) are involved. For ProSe communication scenario, if UEs are in proximity of each other, they may be able to use a local or direct path. Figure 2 and 3 show two examples of the data path for ProSe communication, and Figure 4 shows an example of control path for ProSe communication.

U.S. Patent Publication No. 2009/0232142 discloses how a wireless terminal establishes a peer-to-peer connection with another wireless terminal by monitoring a Connection Identifier (CID) broadcast channel and negotiating with each other via paging signaling to determine a CID for this connection. After the peer-to-peer connection is established, either party of the connection may signal the party's transmit request (such as traffic transmission request/request response resource) at a scheduling resource associated with the CID if the party has information for transmission. Information may then be transmitted at the following data segment resource if the connection gains the resource. Additional details are available in U.S. Patent Publication No. 2009/023142.

When two different connections use the same CID, a CID collision would occur and may cause significant interferences. U.S. Patent Publication No. 2012/0008571 discloses methods for detecting a CID collision. For example, a UE may detect a CID collision when it detects an unexpected signal on a CID broadcast channel or in a traffic slot). Upon detecting a CID collision, the UE may propose a temporary CID for use until the next CID broadcasting. In the next CID broadcasting, a new CID is selected to replace the temporary CID. Further details are available in U.S. Patent Publication No. 2012/00085771.

From the perspective of public safety, interferences due to CID collision may result in fatal damages if critical messages could not be delivered quickly and successfully. Thus, it would better to avoid CID collision completely at least for communications involving public safety.

According to Section 5.2.7.5 of 3GPP TR22.803-100 [1], group management is outside the scope of ProSe study item, which implies it is the responsibility of an upper layer in the UE. So, there should be an administration entity in the public safety communication system responsible for group management. It would then be feasible for the administration entity to allocate a CID to each direct connection so that CID collision could be avoided. It would be possible that one UE in the public safety communication system may play the role of an administration entity for other UEs.

If the administration entity and the concerned UEs are within the infrastructure coverage, a connection between the administration entity and each UE could be established via the infrastructure so that a CID for a new ProSe connection could be communicated on the connection via the infrastructure. If infrastructure coverage is not available, a ProSe communication session may be established via a paging procedure. For example, when the administration entity wants to initiate a ProSe communication session with the UE, the administration would select a CID from the available CID pool and would send a paging message carrying at least the CID to the UE. The UE may then accept the CID unconditionally and may reply with a paging response message. If the ProSe communication session is initiated by the UE, the UE may send a paging message to request the session. The administration entity may then reply with a paging response message carrying at least the selected CID to the UE. In this situation, the CID would also be allocated by the administration entity.

Thus, even though there is no connection existing between the administration entity and the UE, it is still possible for the UE to get a CID for a new connection from the administration entity via a paging procedure and then to send the CID to the other party of the new connection. As an example, the UE may send a paging message to request a CID, and the administration entity may reply a paging response message with the CID being allocated.

In general, a paging procedure contains at least two messages (e.g., a paging message sent by an originator and a paging response message replied by a responder). The paging message contains at least a UE identifier of the responder so that the responder would know that the message is for it. The paging response message contains at least a UE identifier of the originator. In one embodiment, the paging message may also contain a UE identifier of the originator so that the responder knows who transmitted the paging message. The paging response message may optionally contain a UE identifier of the responder.

In another embodiment, the paging message may be transmitted at a paging resource determined according to at least the UE identifier of the responder to reduce message collision and save power of the responder. Similarly, the paging response message may be transmitted at a paging resource determined according to at least the UE identifier of the originator. Furthermore, the paging message and/or the paging response message may be repeated multiple times.

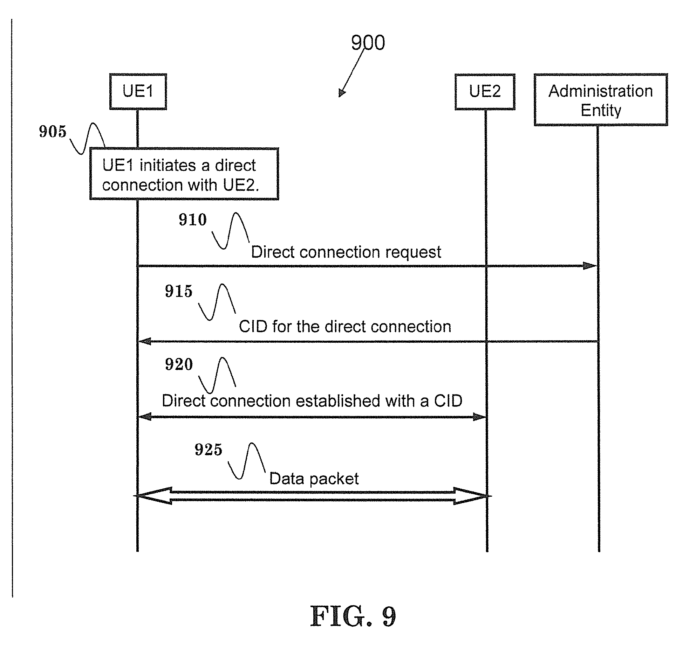

FIG. 9 is flow chart 900 in accordance with one exemplary embodiment. In step 905, a first UE (User Equipment) initiates a direct connection with a second UE and with an administration entity. In step 910, the first UE sends a direct connection request to an administration entity of the ProSe communication system. In step 915, the first UE receives from the administration entity a CID (Connection Identifier) identifying the direct connection between the first UE and the second UE. The direct connection is established in step 920. Then, data packets can be transferred between the first UE and the second UE in step 925. In one embodiment, the first UE communicates with the administration entity via an infrastructure connection. Furthermore, a data path of the direct connection goes directly between the first UE and the second UE without via any network node. In another embodiment, the first UE communicates with the second UE via radio resources allocated for the CID. In addition, radio resources for the ProSe communication system are configured in system information of a cell.

Referring back to FIGs. 3 and 4, in one embodiment, the device 300 could include a program code 312 stored in memory 310 to establish a direct connection in a ProSe communication system. In one embodiment, the CPU 308 could execute the program code 312 to enable a first UE (i) to initiate a direct connection with a second UE, and (ii) to receive from an administration entity of the ProSe communication system a CID identifying the direct connection. In addition, the CPU 308 could execute the program code 312 to perform all of the above-described actions and steps or others described herein.

In one embodiment, the first UE transmits or receives a packet via radio resources allocated for the CID. In addition, the first UE gains radio resources for the CID according to signals transmitted on a connection scheduling channel by UEs which own direct connections. Furthermore, the connection scheduling channel may contain traffic transmission request resource(s) and/or traffic transmission request response resource(s) for each CID. Also, radio resources for the ProSe communication system are configured in system information of a cell, pre-configured in the first UE, configured by the administration entity, or located on a specific public safety frequency spectrum.

In one embodiment, the data path of the direct communication goes directly between UEs without via a network node (such as evolved Node B). Furthermore, the communication is a ProSe communication, a ProSe group communication, or a ProSe broadcast communication. In addition, the connection could be used for voice service or for public safety service.

Referring back to FIGs. 3 and 4, the device 300 could include a program code 312 stored in memory 310 to establish a direct connection in a ProSe communication system. In one embodiment, the CPU 308 could execute the program code 312 to enable an administrative entity of the ProSe communication system (i) to receive a request from a first UE to establish a direct connection with a second UE, and (ii) to send a CID to the first UE, wherein the CID is used for identifying the direct connection. In addition, the CPU 308 could execute the program code 312 to perform all of the above-described actions and steps or others described herein.

In one embodiment, the administration entity communicates with the first UE via an infrastructure connection. Furthermore, the data path of the direct connection could go directly between the first UE and the second UE without via any network node. In addition, the radio resources for the ProSe communication system could be configured in system information of a cell.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for establishing a direct connection in a Proximity Services, in the following also referred to as ProSe, communication system, comprising:
a first User Equipment, in the following also referred to as UE, initiates a direct connection with a second UE (910); and
the first UE receives a Connection Identifier, in the following also referred to as CID, from an administration entity of the ProSe communication system, wherein the CID is used for identifying the direct connection (915).

2. The method of claim 1, wherein the first UE communicates with the administration entity via an infrastructure connection.

3. The method of claim 1 or 2, wherein a data path of the direct connection goes directly between the first UE and the second UE without via any network node.

4. The method of anyone of claims 1 to 3, wherein the first UE communicates with the second UE via radio resources allocated for the CID.

5. The method of anyone of claims 1 to 4, wherein radio resources for the ProSe communication system are configured in system information of a cell.

6. A method for establishing a direct connection in a Proximity Services, in the following also referred to as ProSe, communication system, comprising:
an administrative entity of the ProSe communication system receives a request from a first User Equipment, in the following also referred to as UE, to establish a direct connection with a second UE (910); and
the administrative entity sends a Connection Identifier, in the following also referred to as CID, to the first UE, wherein the CID is used for identifying the direct connection (915).

7. The method of claim 6, wherein the administration entity communicates with the first UE via an infrastructure connection.

8. The method of claim 6 or 7, wherein a data path of the direct connection goes directly between the first UE and the second UE without via any network node.

9. The method of anyone of claims 6 to 8, wherein radio resources for the ProSe communication system are configured in system information of a cell.

10. A communication device for establishing a direct connection in a Proximity Services, in the following also referred to as ProSe, communication system, the communication device comprising:
a control circuit (306);
a processor (308) installed in the control circuit (306);
a memory (310) installed in the control circuit (306) and operatively coupled to the processor (308);
wherein the processor (308) is configured to execute a program code (312) stored in memory (310) to establish the direct connection by:
initiating, at a first User Equipment, in the following also referred to as UE, a direct connection with a second UE (910); and
receiving, at the first UE, a Connection Identifier, in the following also referred to as CID, from an administration entity of the ProSe communication system, wherein the CID is used for identifying the direct connection (915).

11. The communication device of claim 10, wherein the first UE communicates with the administration entity via an infrastructure connection.

12. The communication device of claim 10 or 11, wherein a data path of the direct connection goes directly between the first UE and the second UE without via any network node.

13. The communication device of anyone of claims 10 to 12, wherein the first UE communicates with the second UE via radio resources allocated for the CID.

14. The communication device of anyone of claims 10 to 13, wherein radio resources for the ProSe communication system are configured in system information of a cell.
